# EUROPEAN PATENT SPECIFICATION

(11) **EP 3 379 600 B1**
(45) Date of publication and mention of the grant of the patent: **21.10.2020**
(21) Application number: 17190100.2
(22) Date of filing: 08.09.2017
(51) Int. Cl.: H01M 2/14, H01M 2/26, H01M 2/30, H01M 10/04, H01M 2/02, H01M 10/0525, H01M 10/0585

(54) **SECONDARY BATTERY, BATTERY PACK, AND VEHICLE**
SEKUNDÄRBATTERIE, BATTERIEPACK UND FAHRZEUG
BATTERIE SECONDAIRE, BLOC-BATTERIE ET VÉHICULE

(30) Priority: 21.03.2017 JP 2017054643
(43) Date of publication of application: 26.09.2018
(73) Proprietor: KABUSHIKI KAISHA TOSHIBA, Minato-ku Tokyo 105-8001 (JP)
(72) Inventor: Yoshima, Kazuomi, Tokyo, 105-8001 (JP); Sasakawa, Tetsuya, Tokyo, 105-8001 (JP); Harada, Yasuhiro, Tokyo, 105-8001 (JP); Takami, Norio, Tokyo, 105-8001 (JP)
(74) Representative: Hoffmann Eitle

(56) References cited:
- EP-A1- 1 826 843
- EP-A1- 2 500 972
- US-A1- 2013 004 825

## Description

### FIELD

Approaches described herein relate generally to a secondary battery, a battery pack, and a vehicle.

### BACKGROUND

Secondary batteries such as a lithium ion secondary battery and a nonaqueous electrolyte secondary battery have been provided as high energy-density batteries. The secondary batteries are anticipated as power sources for hybrid automobiles, electric automobiles, uninterruptible power supplies for portable telephone base stations, and the like. However, even when the lithium ion secondary battery is increased in size, a voltage to be obtained from a unit cell is about 2.3 to 3.7 V. Therefore, unit cells need to be connected in series and controlled to obtain a high voltage, so that the whole device is increased in size.

A bipolar battery is also provided to obtain a high voltage with a unit cell. The bipolar battery is a battery having a structure in which layers are stacked in series across a bipolar electrode and an electrolyte layer. The bipolar electrode forms a positive electrode active material layer on one plate surface of a current collector, and forms a negative electrode active material layer on the other plate surface. This bipolar battery has the layers stacked in series inside the unit cell, and is therefore capable of obtaining a high voltage even in the unit cell. It is thus possible to obtain an output with a high-voltage constant current even when obtaining a high output, and also possible to considerably reduce electric resistance in a battery connecting portion.

Possible methods of increasing the energy density of the bipolar battery are, for example, to increase the electrode areas of positive and negative electrodes, and to connect small-area bipolar unit cells in parallel. Another possible method is to produce stacks comprising electrode groups, and connect the stacks in series inside. The problems in this case are that the stacks contact one another and short-circuit, and that when the capacity of the battery is higher, resistance is higher in a connector which connects the stacks to one another.

US 2013/004825 A1 describes a battery that includes a first electrode plate which has a potential of a first polarity; a second electrode plate which includes a contact unit, and has a potential of a second polarity; a separator which is arranged between the first electrode plate and the second electrode plate; and a conductive battery container in which the first electrode plate, the second electrode plate, and the separator are accommodated, and in which the contact unit comes into contact with the battery container.

EP 2 500 972 A1 describes a lithium rechargeable battery having a multidirectional lead-tab structure. The lithium rechargeable battery includes: an electrode assembly in which a separation film and an electrode plate having a current collector, an active material, and a tab are alternately stacked; a lead electrically connected to the tab; and a battery case, wherein the lead is divided into a positive electrode lead and a negative electrode lead, and at least one positive electrode lead and at least one negative electrode lead are provided.

EP 1 826 843 A1 describes a nonaqueous electrolyte battery that includes a flattened electrode group, a case, a positive electrode terminal and a negative electrode terminal. The positive electrode terminal is bent around one edge portion of the positive electrode terminal, curved toward the electrode group and reaches a sealed portion. The other edge portion of the positive electrode terminal extends from the case through the sealed portion. The negative electrode terminal is bent around one edge portion of the negative electrode terminal, curved toward the electrode group and reaches the sealed portion. The other edge portion of the negative electrode terminal extends from the case through the sealed portion. The positive electrode terminal satisfies the formula t₂ × W₂ ≥ 0.25 Sₚ and the negative electrode terminal satisfies the formula t₃ × W₃ ≥ 0.25 Sₙ.

### BRIEF DESCRIPTION OF THE DRAWINGS

FIG. 1 is an external perspective view of a secondary battery according to a first approach;
FIG. 2 is a perspective view showing an electrode group stack of the secondary battery;
FIG. 3 is an exploded perspective view of the electrode group stack;
FIG. 4 is a sectional view of the secondary battery;
FIG. 5 is a sectional view of the secondary battery;
FIG. 6 is an external perspective view of a secondary battery according to a second approach; This embodiment is not according to the invention as defined in the appended claims.
FIG. 7 is a perspective view showing an electrode group stack of the secondary battery; This embodiment is not according to the invention as defined in the appended claims.
FIG. 8 is an exploded perspective view of the electrode group stack; This embodiment is not according to the invention as defined in the appended claims.
FIG. 9 is a sectional view of the secondary battery;
FIG. 10 is a perspective view schematically showing one example of a battery module according to a third approach;
FIG. 11 is an exploded perspective view schematically showing one example of a battery pack according to a fourth approach;
FIG. 12 is a block diagram showing one example of an electric circuit of the battery pack;
FIG. 13 is a sectional view schematically showing one example of a vehicle according to a fifth approach;
FIG. 14 is a diagram schematically showing another example of a vehicle according to a sixth approach;
FIG. 15 is a side view showing the configuration of an electrode group according to an alternative approach;
FIG. 16 is a sectional showing a part of FIG. 15 in enlarged form;
FIG. 17 is a partially cut-out perspective view showing the external of a secondary battery according to an alternative approach; and
FIG. 18 is a sectional view of a secondary battery according to Comparative Example 1.

### DETAILED DESCRIPTION

A secondary battery includes two or more electrode groups stacked in a first direction. Each of the electrode groups comprises negative electrodes and positive electrodes. The negative electrodes and the positive electrodes are alternately stacked in the first direction. Each of the negative electrodes comprises a negative electrode tab. Each of the positive electrodes comprises a positive electrode tab. The negative electrode tabs of one of the electrode groups and the positive electrode tabs of the other electrode group are arranged in rows in the first direction at one end in a second direction that intersects with the first direction of a stack in which the electrode groups are stacked. The negative electrode tabs of one of the electrode groups and the positive electrode tabs of the other electrode group are electrically connected in series by a connector. One of the positive electrode tabs of one of the electrode groups and the negative electrode tabs of the other electrode group is disposed at the other end in the second direction. The other of the positive electrode tabs of one of the electrode groups and the negative electrode tabs of the other electrode group is disposed at one end in the second direction at a position different from those of the negative electrode tabs of one of the electrode groups and the positive electrode tabs of the other electrode group that are connected in series.

### [First Approach]

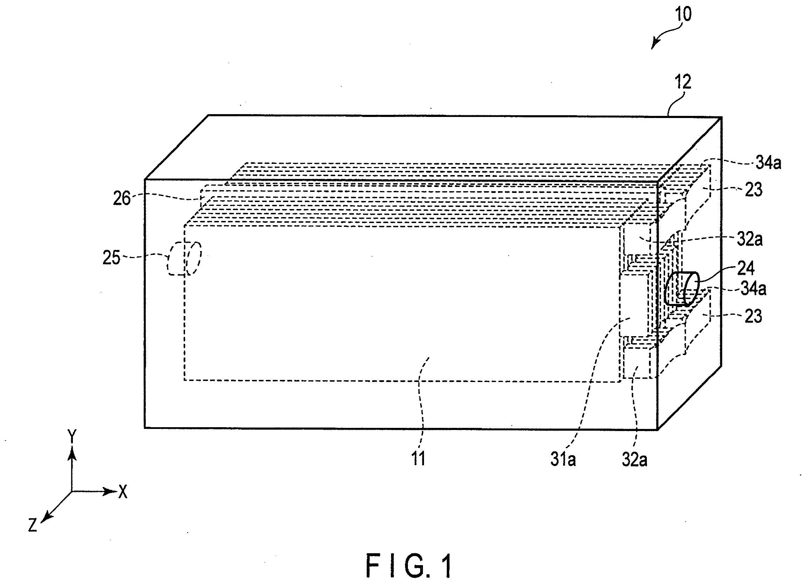

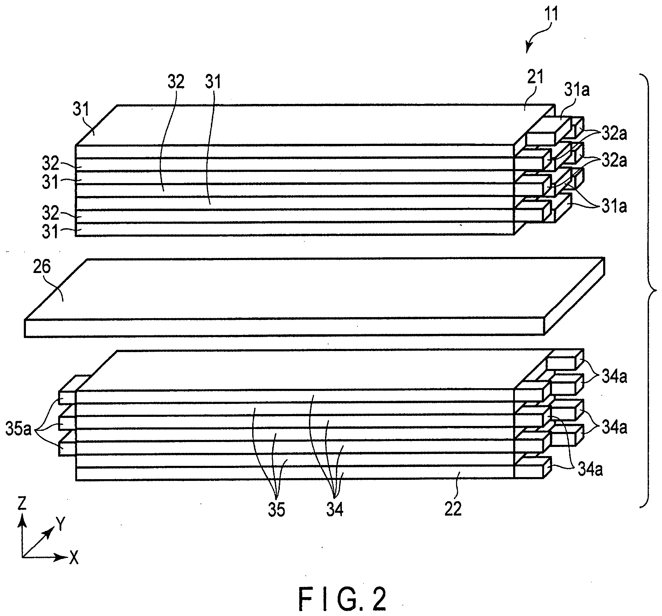

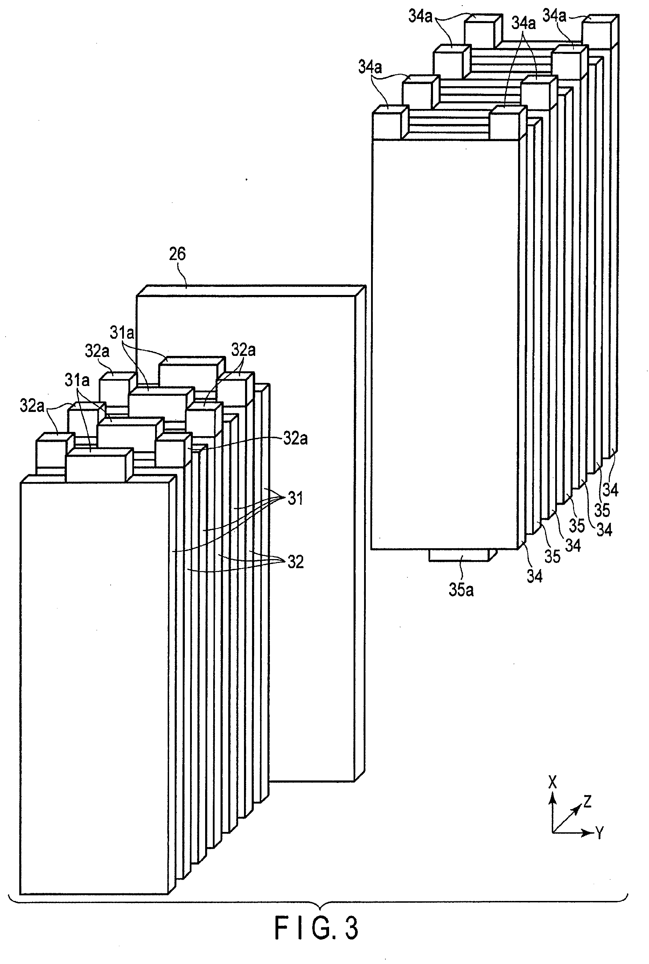

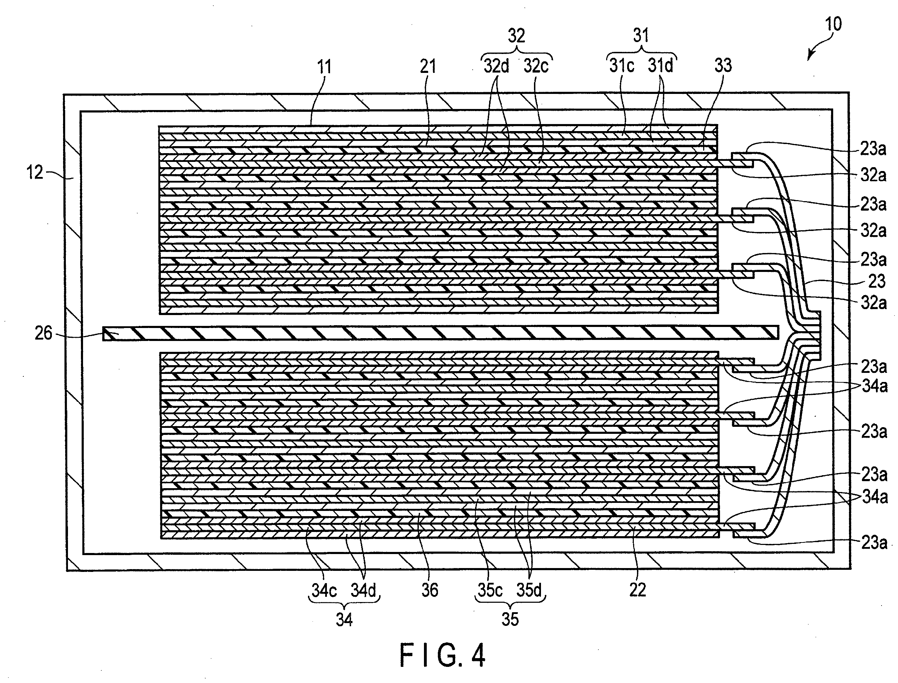

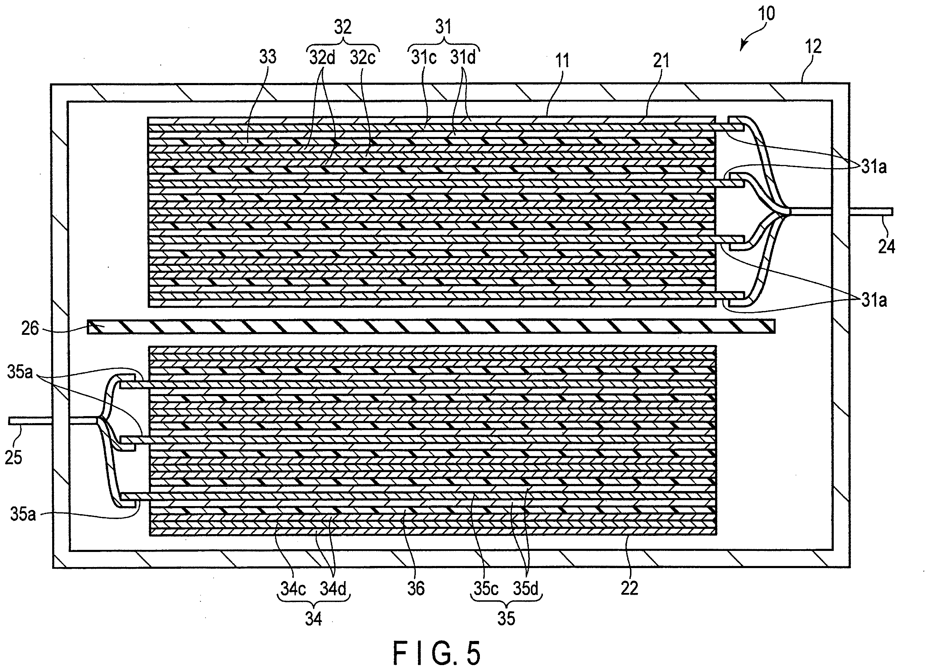

A secondary battery 10 according to a first approach is described below with reference to FIG. 1 to FIG. 5. Arrows X, Y, and Z in the drawings indicate three directions that are orthogonal to one another. Z is along the first direction, X is along the second direction, and Y is along the third direction. In each drawing, configurations are enlarged or reduced in size or omitted as needed for explanation. FIG. 1 is a perspective view showing the external of the secondary battery 10 according to the present approach. FIG. 2 and FIG. 3 are exploded perspective views showing the configuration of an electrode group stack of the secondary battery 10. FIG. 4 and FIG. 5 are sectional views of FIG. 1.

The secondary battery 10 shown in FIG. 1 to FIG. 5 comprises an electrode group stack 11, and a container member 12 which houses the electrode group stack 11. In the present approach, the secondary battery 10 is rectangularly configured, and has a negative electrode terminal 24 provided on one side of the container member 12 in the X-direction, and a positive electrode terminal 25 provided on the other side.

The electrode group stack 11 comprises electrode groups 21 and 22, an electrolyte (not shown) with which the electrode groups 21 and 22 are impregnated so that the electrolyte is held therein, a lead 23 which is a connector to electrically connect the electrode groups 21 and 22, external connection terminals 24 and 25 connected to the ends of the respective electrode groups 21 and 22, and an insulating sheet 26 disposed between the electrode groups 21 and 22 that are stacked and arranged. In the present approach, the two electrode groups 21 and 22 that are connected in series by the lead 23 disposed on the other side in the X-direction are stacked across the insulating sheet 26 in the Z-direction.

As shown in FIG. 2 to FIG. 5, one electrode group, for example, the top first electrode group 21 in FIG. 2 comprises negative electrodes 31 having negative electrode tabs 31a which are electrode tabs, positive electrodes 32 having positive electrode tabs 32a which are electrode tabs, a separator 33 disposed between the negative electrode 31 and the positive electrode 32, and an electrolyte with which the negative electrodes 31 and the positive electrodes 32 are impregnated. In the present approach, four negative electrodes 31 and three positive electrodes 32 are alternately stacked in the Z-direction by way of example.

The other electrode group, for example, the bottom second electrode group 22 in FIG. 2 comprises negative electrodes 34 having negative electrode tabs 34a, positive electrodes 35 having positive electrode tabs 35a, a separator 36 disposed between the negative electrode 34 and the positive electrode 35, and an electrolyte with which the negative electrodes 34 and the positive electrodes 35 are impregnated. In the present approach, four negative electrodes 34 and three positive electrodes 35 are alternately stacked in the Z-direction by way of example.

As shown in FIG. 4 and FIG. 5, the negative electrodes 31 and 34 comprise current collectors 31c and 34c, and negative electrode layers 31d and 34d formed on one surface or both surfaces of the current collectors 31c and 34c. The negative electrode layers 31d and 34d include an active material, a conductive agent, and a binder. The negative electrode tabs 31a and 34a protrude in the X-direction from any edges in the X-direction as parts of the current collectors 31c and 34c.

The positive electrodes 32 and 35 comprise current collectors 32c and 35c, and positive electrode layers 32d and 35d formed on one surface or both surfaces of the current collectors 32c and 35c. The positive electrode layers 32d and 25d include an active material, a conductive agent, and a binder. The positive electrode tabs 32a and 35a protrude in the X-direction from any edges in the X-direction as parts of the current collectors 32c and 35c.

The negative electrode tabs of one of a pair of electrode groups 21 and 22 and the positive electrode tabs of the other electrode group are aligned in the Z-direction. That is, in the present approach, the positive electrode tabs 32a of the first electrode group 21 and the negative electrode tabs 34a of the second electrode group 22 are aligned in the Z-direction on the same edge of the stack 11 on one side in the X-direction, collected in one place, and connected in series by the lead 23. The positive electrode tabs 32a of the first electrode group 21 and the negative electrode tabs 34a of the second electrode group 22 are collected at the middle position of the stack 11 in the X-direction, for example, by the lead 23.

The positive electrode tabs 35a on one side and the negative electrode tabs 31a on the other side that are not connected by the lead 23 respectively extend from one side and the other side in the X-direction, and are respectively connected to the terminals 24 and 25. Specifically, in the present approach, the negative electrode tabs 31a extend from one side in the X-direction and are thus connected to the terminal 24, and the positive electrode tabs 35a extend from the other side and are thus connected to the terminal 25.

Here, pairs of positive electrode tabs 32a and pairs of negative electrode tabs 34a which are connected to the lead 23 are provided on both sides in the Y-direction. In contrast, the positive electrode tabs 35a and the negative electrode tabs 31a which are connected to the terminals 24 and 25 are provided one by one in the middle of the Y-direction. Rows of the positive electrode tabs 32a and the negative electrode tabs 34a and rows of the positive electrode tabs 35a and the negative electrode tabs 31a are different in position in the Y-direction, and are arranged without overlap. Moreover, a total dimension of a pair of positive and negative electrode tabs 35a and 34a on both sides in the Y-direction is set to be the same as the dimensions of one positive electrode tab 35a and one negative electrode tab 31a in the middle. For example, in the present approach, a Y-direction dimension Y1 of a pair of positive electrode tabs 32a and a pair of negative electrode tabs 34a is set at 1/2 times a Y-direction dimension Y2 of the positive electrode tabs 32a and the negative electrode tabs 34a provided in the middle. For example, when the Y-direction dimension of the positive electrodes 32 and 35 and the negative electrodes 31 and 33 is Y0, the positive electrode tabs 32a and the negative electrode tabs 34a are set at 1/4 Y0, and the positive electrode tabs 35a and the negative electrode tabs 31a are set at 1/2 Y0. Therefore, the lead-out directions of the tabs connected to different terminals are separated, and the tabs connected to each other are aligned, whereby the lead-out distance of the electrodes can be reduced, and connection processing can be easier. It is thus possible to minimize the distance of the lead 23. The dimension of each tab is equally set, and the dimensions of the current collectors 31c, 32c, 34c, and 35c are distributed, whereby the sectional area of each tab is increased, and energy density can be improved accordingly.

It is preferred to use aluminum foil or aluminum alloy foil having a purity of 98% or more as the negative electrode current collector. As the aluminum alloy, an alloy including one or more kinds of elements selected from the group consisting of iron, magnesium, zinc, manganese, and silicon in addition to aluminum is preferred. For example, an Al-Fe alloy, an Al-Mn-based alloy, and an Al-Mg-based alloy are able to obtain higher strength than that of aluminum. On the other hand, a content of aluminum and transition metals such as nickel, chromium, etc., in the aluminum alloy is preferably 100 ppm or less (including 0 ppm). For example, the Al-Cu-based alloy has increased strength, but deteriorated corrosion resistance, and thus, the Al-Cu-based alloy is not suitable as the current collector.

A still preferable aluminum purity is in a range of 99.95% to 98.0%. This purity range is appropriate because titanium-containing oxide particles having an average secondary particle diameter of 2 µm or more is used to reduce a negative electrode pressing pressure so that elongation of the Al foil may be reduced. As a result, electron conductivity of the aluminum foil current collector may be increased, and in addition to this advantage, disintegration of the secondary particles of the titanium-containing oxide is suppressed, whereby a low-resistance negative electrode can be produced.

It is preferred that the average particle diameter (diameter) of the secondary particles of the negative electrode active material is larger than 5 µm. It is still preferred that the secondary particle diameter of the negative electrode active material is 7 µm to 20 µm. Within this range, a high-density negative electrode can be produced while a low pressure of a negative electrode press is kept, and elongation of the aluminum foil current collector can be suppressed. The negative electrode active material in which the average particle diameter of the secondary particles is larger than 5 µm is obtained as follows: active material raw materials are reacted to synthetically prepare an active material precursor having an average particle diameter of 1 µm or less, and the active material precursor is fired and pulverized by use of a pulverizer such as a ball mill, a jet mill, etc., and then in a firing treatment, the active material precursor is agglomerated to be grown into the secondary particles having a large particle diameter. The average particle diameter of primary particles is desirably 1 µm or less. This allows the above effects to be noticeable in high-input performance (quick charge). This is because, for example, a diffusion distance of lithium ions in the active material is shortened and the specific surface area is increased. A still preferred average particle diameter is 0.1 to 0.8 µm. Further, it is preferred to cover the surface of the secondary particles with a carbon material to reduce the resistance of the negative electrode. This can be produced, for example, by adding a precursor of the carbon material in a process of producing the secondary particles, and firing at a temperature of 500°C or higher under an inert atmosphere.

Further, the secondary particles and the primary particles of titanium-containing oxide may be mixed in the negative electrode layer after the production of the negative electrode. In view of higher densification, it is preferred that the primary particles are present in an amount of 5 vol% to 50 vol% in the negative electrode layer.

Examples of the negative electrode active material that can have lithium ions inserted and extracted may include a carbon material, a graphite material, a lithium alloy material, a metal oxide, and a metal sulfide. Among them, it is preferred to select negative electrode active material particles of at least one or more kinds of Ti-containing oxides selected from lithium-titanium oxide, titanium oxide, niobium-titanium oxide, and lithium-sodium-niobium-titanium oxide which have a potential of having lithium ions inserted and extracted within a range of 1 V to 3 V based on an Li potential.

The titanium-containing oxide may include a spinel structure lithium-titanium oxide represented by General Formula Li₄₊ₓTi₅O₁₂ (-1 ≤ x ≤ 3), a lithium-titanium oxide as a ramsdellite structure lithium-titanium oxide such as Li₂₊ₓTi₃O₇, Li₁₊ₓTi₂O₄, Li_{1.1+x}Ti_{1.8}O₄, Li_{1.07+x}Ti_{1.86}O₄, and LiₓTiO₂ (0 ≤ x), titanium oxide (TiO₂ as a structure before charging) having a monoclinic structure (TiO₂(B) as a structure before charging), a rutile structure, or an anatase structure represented by General Formula Li_{X}TiO₂ (0 ≤ x), and niobium-titanium oxide represented by LiₐTiM_{b}Nb_{2±β}O_{7±σ} (0 < a < 5, 0 < b < 0.3, 0 < β < 0.3, 0 < σ < 0.3, M includes at least one or more kinds of elements selected from the group consisting of Fe, V, Mo, and Ta). One of the above may be used alone, or the above may be mixed. The spinel structure lithium-titanium oxide represented by General Formula Li₄₊ₓTi₅O₁₂ (-1 ≤ x ≤ 3) with a very small volume change is still preferred. The use of the titanium-containing oxides permits the aluminum foil to be used as a negative electrode current collector in the same manner as a positive electrode current collector instead of conventional copper foils, thereby enabling weight and cost reductions. This is also advantageous to a bipolar electrode structure.

The average particle diameter of the negative electrode active material is set to the above-described range because when the specific surface area of the negative electrode is increased to 3 m²/g to 50 m²/g by use of the primary particles having an average particle diameter of more than 1 µm, reduction in porosity of the negative electrode cannot be avoided. However, when the average particle diameter is small, agglomeration of the particles easily occurs, and distribution of the nonaqueous electrolyte is biased toward the negative electrode, which may cause depletion of the electrolyte in the positive electrode, and thus, a lower limit value is preferably set to be 0.001 µm.

The negative electrode active material preferably has an average particle diameter of 1 µm or less, and has a specific surface area measured according to the BET method by N₂ adsorption ranging from 3 m²/g to 200 m²/g. Accordingly, affinity between the negative electrode and the nonaqueous electrolyte can be further increased.

A reason that the specific surface area of the negative electrode is defined in the above range is described. When the specific surface area is less than 3 m²/g, the agglomeration of the particles is prominent, and the affinity between the negative electrode and the nonaqueous electrolyte is lowered, which increases interface resistance of the negative electrode, and as a result, output characteristics and charge and discharge cycle characteristics are deteriorated. On the other hand, when the specific surface area is more than 50 m²/g, the distribution of the nonaqueous electrolyte is biased toward the negative electrode, resulting in a shortage of the nonaqueous electrolyte in the positive electrode, and thus, the output characteristics and the charge and discharge cycle characteristics cannot be improved. A still preferred range of the specific surface area is 5 m²/g to 50 m²/g. Here, the specific surface area of the negative electrode means the surface area per 1 g of the negative electrode layer (excluding the weight of the current collector). The negative electrode layer is a porous layer including the negative electrode active material, the conductive agent, and the binder, which are supported on the current collector.

It is preferred that porosity of the negative electrode (excluding the current collector) is within a range of 20% to 50%. Accordingly, it is possible to obtain a negative electrode having excellent affinity between the negative electrode and the electrolyte and having a high density. A still preferable range of the porosity is 25% to 40%.

The negative electrode current collector is desirably aluminum foil or aluminum alloy foil.

The thickness of the aluminum foil and the aluminum alloy foil is 20 µm or less, and still preferably 15 µm or less. The purity of the aluminum foil is preferably 99.99% or more. The aluminum alloy is preferably an alloy including elements such as magnesium, zinc, and silicon. On the other hand, transition metals such as iron, copper, nickel, and chromium are preferably 100 ppm or less.

As the conductive agent, for example, a carbon material can be used. Examples of the carbon material may include acetylene black, carbon black, cokes, carbon fiber, graphite, aluminum powder, TiO, etc. Still preferably, the cokes, the graphite, TiO powder having an average particle diameter of 10 µm or less, or the carbon fiber having an average fiber diameter of 1 µm or less, in which a heat treatment temperature is 800°C to 2000°C, is preferred. The BET specific surface area of these carbon materials by N₂ adsorption is preferably 10 m²/g or more.

Examples of the binder may include polytetrafluoroethylene (PTFE), polyvinylidene fluoride (PVdF), fluorine-based rubber, styrene butadiene rubber, and core shell binder, etc.

Regarding a mixing ratio of the active material, the conductive agent, and the binder of the negative electrode, the negative electrode active material is preferably in a range of 80 wt% to 95 wt%, the conductive agent is preferably in a range of 3 wt% to 18 wt%, and the binder is preferably in a range of 2 wt% to 7 wt%.

The negative electrode is produced by the suspension of the above-described negative electrode active material, the conductive agent, and the binder in an appropriate solvent, the application of the suspension to the current collector, drying, and heating press. Here, the particles of the negative electrode active material are uniformly dispersed in a state where the addition amount of the binder is small. The reason is that if an addition amount of the binder is larger, dispersibility of the particles tends to be increased, but the surface of the particles is easily covered with the binder, and thus, the specific surface area of the negative electrode is reduced. When the addition amount of the binder is small, the particles easily agglomerate, and thus, stirring conditions (the number of revolutions of a ball mill, stirring time and stirring temperature) is adjusted to suppress the agglomeration of particles. Accordingly, fine particles can be uniformly dispersed, and a negative electrode can be obtained. In addition, when the addition amount of the binder and the stirring conditions are included within appropriate ranges but the addition amount of the conductive agent is large, the surface of the negative electrode active material is easily covered with the conductive agent, and pores on the surface of the negative electrode also tend to decrease, and thus, the specific surface area of the negative electrode tends to be smaller. When the addition amount of the conductive agent is small, the negative electrode active material is easily pulverized, and thus, the specific surface area of the negative electrode tends to be large, or dispersibility of the negative electrode active material is lowered, and thus, the specific surface area of the negative electrode tends to be smaller. Further, not only the addition amount of the conductive agent, but also the average particle diameter and specific surface area of the conductive agent may affect the specific surface area of the negative electrode. It is preferred that the conductive agent has an average particle diameter which is the same as or less than the average particle diameter of the negative electrode active material, and a specific surface area larger than that of the negative electrode active material.

It is preferred to use, as the positive electrode current collector, aluminum foil or aluminum alloy foil having a purity of 99% or more. As the aluminum alloy, an alloy including one or more kinds of elements selected from the group consisting of iron, magnesium, zinc, manganese, and silicon in addition to aluminum is preferred. For example, an Al-Fe alloy, an Al-Mn-based alloy, and an Al-Mg-based alloy are able to obtain higher strength than that of aluminum. On the other hand, a content of aluminum and transition metals such as nickel, chromium, etc., in the aluminum alloy is preferably 100 ppm or less (including 0 ppm). For example, the Al-Cu-based alloy has increased strength, but deteriorated corrosion resistance, and thus, the Al-Cu-based alloy is not suitable as the current collector.

A still preferable aluminum purity is in a range of 99.99% to 99.0%. Within this range, deterioration of a high-temperature cycle lifespan due to dissolution of impurity elements can be reduced.

Examples of the positive electrode active material may include lithium-manganese composite oxide, lithium-nickel composite oxide, lithium-cobalt-aluminum composite oxide, lithium-nickel-cobalt-manganese composite oxide, spinel type lithium-manganese-nickel composite oxide, lithium-manganese-cobalt composite oxide, olivine type lithium iron phosphate (LiFePO₄) or lithium manganese phosphate (LiMnPO₄), etc.

For example, the lithium-manganese composite oxides such as LiₓMn₂O₄ or LiₓMnO₂, etc., lithium-nickel-aluminum composite oxides such as LiₓNi_{1-y}Al_{y}O₂, etc., lithium-cobalt composite oxides such as LiₓCoO₂, etc., lithium-nickel-cobalt composite oxides such as LiₓNi_{1-y-z}Co_{y}Mn_{z}O₂, etc., lithium-manganese-cobalt composite oxides such as LiₓMnyCo_{1-y}O₂, etc., the spinel type lithium-manganese-nickel composite oxides such as LiₓMn_{2-y}Ni_{y}O₄, etc., lithium phosphate having an olivine structure such as LiₓFePO₄, LiₓFe_{1-y}Mn_{y}PO₄, LiₓCoPO₄, etc., for example, fluorinated iron sulfate LiₓFeSO₄F may be included. x and y preferably have a range of 0 to 1 unless otherwise specified.

These composite oxides are preferable because it is possible to obtain a high positive electrode voltage. Among them, the lithium-nickel-aluminum composite oxide, the lithium-nickel-cobalt-manganese composite oxide, and the lithium-manganese-cobalt composite oxide can suppress the reaction with the electrolyte under a high temperature environment to greatly improve battery lifespan. In particular, the lithium-nickel-cobalt-manganese composite oxide that can be represented by LiₓNi_{1-y-z}Co_{y}Mn_{z}O₂ (0 < x < 1.1, 0 < y < 0.5, 0 < z < 0.5) is preferred. High temperature durability lifespan can be obtained by using the lithium-nickel-cobalt-manganese composite oxide.

The conductive agent to increase electron conductivity and to suppress the resistance of contact with the current collector may include, for example, acetylene black, carbon black, or graphite, etc.

The binder to bind the active material and the conductive agent may include, for example, polytetrafluoroethylene (PTFE), polyvinylidene fluoride (PVdF), fluorine-based rubber, etc.

Regarding a mixing ratio of the positive electrode active material, the conductive agent, and the binder, the positive electrode active material is preferably in a range of 80 wt% to 95 wt%, the conductive agent is preferably in a range of 3 wt% to 18 wt%, and the binder is preferably in a range of 2 wt% to 7 wt%. When a content of the conductive agent is 3 wt% or more, the above-described effect can be exhibited, and when the content of the conductive agent is 18 wt% or less, decomposition of the electrolyte on the surface of the conductive agent under high temperature can be reduced. When a content of the binder is 2 wt% or more, sufficient electrode strength can be obtained, and when the content of the binder is 7 wt% or less, an insulating part of the electrode may be reduced.

The positive electrode is produced, for example, by the suspension of the positive electrode active material, the conductive agent, and the binder in an appropriate solvent, the application of the suspension to the positive electrode current collector, drying, and pressing. A pressure of pressing the positive electrode is preferably in a range of 0.15 ton/mm to 0.3 ton/mm. This range is preferred because adhesion property (peel strength) between the positive electrode layer and the aluminum foil positive electrode current collector is increased and an elongation rate of a positive electrode current collector foil is 20% or less.

The separator 33 is formed into a rectangular sheet shape. As the separator 33, for example, a porous film or synthetic resin nonwoven fabric including polyethylene, polypropylene, cellulose, or polyvinylidene fluoride (PVdF) is used. A preferable porous film is formed from polyethylene or polypropylene, melts at a fixed temperature, can shut off a current, and can therefore improve safety. Alternatively, insulating particles may be formed on one surface or both surfaces of the positive electrode and/or the negative electrode as the separator 33. The insulating particles include metal oxides. Moreover, the use of a solid electrolyte as insulating particles can reduce the resistance of the secondary battery.

It is possible to use, as the electrolyte, for example, a liquid nonaqueous electrolyte which is prepared by dissolving electrolyte salt in an organic solvent, or gel like nonaqueous electrolyte which is a composite of a liquid electrolyte and a polymer material.

The liquid nonaqueous electrolyte is preferably electrolyte salt dissolved in an organic solvent at a concentration of 0.5 M to 2.5 M.

Examples of the electrolyte salt may include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bistrifluoromethylsulfonylimide [LiN(CF₃SO₂)₂], and mixtures thereof. The electrolyte salt is preferably resistant to oxidation even at a high potential, and most preferably LiPF₆.

Examples of the organic solvent include a cyclic carbonate such as propylene carbonate (PC), ethylene carbonate (EC), or vinylene carbonate; a linear carbonate such as diethyl carbonate (DEC), dimethyl carbonate (DMC), or methyl ethyl carbonate (MEC); a cyclic ether such as tetrahydrofuran (THF), 2-methyl tetrahydrofuran (2-MeTHF), or dioxolane (DOX); a linear ether such as dimethoxy ethane (DME) or diethoxy ethane (DEE); γ-butyrolactone (GBL), acetonitrile (AN), and sulfolane (SL). These organic solvents may be used singularly or as a mixed solvent.

Examples of the polymeric material include polyvinylidene fluoride (PVdF), polyacrylonitrile (PAN), and polyethylene oxide (PEO).

A preferable organic solvent is a mixed solvent in which at least two or more of a group consisting of propylene carbonate (PC), ethylene carbonate (EC), and diethyl carbonate (DEC) are mixed, or a mixed solvent including γ-butyrolactone (GBL). By using these mixed solvents, a nonaqueous electrolyte secondary battery with excellent high-temperature characteristics can be obtained.

The electrode groups 21 and 22 are connected by the lead 23. Specially, the positive electrodes 32 of one electrode group 21 are connected in series to the negative electrodes 34 of the other electrode group 22 by the lead 23.

The lead 23 is made of a metallic material, and is connected to the edges of the other ends of the electrode groups 21, 21 in the X-direction. The lead 23 comprises strip-shaped connection pieces 23a having the same width as the width of the tabs 32a and 34a. The respective connection pieces 23a are joined to the tabs 34a and 32a on one end, and collectively joined to each other in one place on the other end. The lead 23 is connected to the positive electrode tabs 32a of one electrode group 21 and the negative electrode tabs 34a of the other electrode group 22, and thereby connects a pair of electrode groups 21 and 22 in series.

It is preferred to use aluminum foil or aluminum alloy foil having a purity of 98% or more as the lead 23. As the aluminum alloy, an alloy including one or more kinds of elements selected from the group consisting of iron, magnesium, zinc, manganese, and silicon in addition to aluminum is preferred. For example, an Al-Fe alloy, an Al-Mn-based alloy, and an Al-Mg-based alloy are able to obtain higher strength than that of aluminum. On the other hand, a content of aluminum and transition metals such as nickel, chromium, etc., in the aluminum alloy is preferably 100 ppm or less (including 0 ppm). For example, the Al-Cu-based alloy has increased strength, but deteriorated corrosion resistance, and thus, the Al-Cu-based alloy is not suitable as the lead. A still preferable aluminum purity is in a range of 99.95% to 98.0%. The thickness of this lead is preferably 20 µm or more. An excessively great thickness leads to deterioration in handling efficiency or deterioration in capacity per unit volume, and the thickness is therefore preferably 1 mm or less, still preferably 500 µm or less, and yet preferably 200 µm or less.

The insulating sheet 26 is an electrically and ion-conductively insulating sheet, and, for example, polypropylene (PP), polyethylene (PE), nylon, or polyethylene terephthalate (PET) can be used as the insulating sheet 26. When the insulating sheet 26 is fusion-bonded to the container member 12, it is preferable to use a material having a thermal fusion bond temperature close to those of the insulating sheet 26 and a resin part of the container member 12.

The insulating sheet 26 is a rectangular sheet larger in area than the surfaces of the electrode groups 21, 21 facing each other. That is, an outer peripheral edge 26a of the insulating sheet 26 protrudes outward more than the outer peripheral edges of the electrode groups 21, 21 in an XY plane. The insulating sheet 26 forms, between the stacked electrode groups 21, 21, a partition which divides the internal space of the container member 12 into one side and the other side in the Z-direction.

The container member 12 is made of, for example, a metallic container. For example, the metallic container is formed into a box shape having a thickness of 1.0 mm or less. The metallic container preferably has a thickness of 0.5 mm or less. For example, the metallic container is made of aluminum or aluminum alloy. As the aluminum alloy, an alloy including an element such as magnesium, zinc, or silicon is preferred. When the alloy includes a transition metal such as iron, copper, nickel, or chromium, its amount is preferably 100 mass ppm or less.

For example, the metallic container is preferably an alloy which includes an element such as manganese, magnesium, zinc, or silicon and which has an aluminum purity of 99.8% or less. A significant increase in the strength of a metal can comprising the aluminum alloy permits a reduction in the thickness of the can. As a result, it is possible to obtain a battery having a small thickness and weight, a high output, and high heat release performance.

The container member 12 can be formed into, for example, a flat shape (thin shape), a circular cylindrical shape, a coin shape, and a button shape in addition to a square shape. The container member 12 includes, for example, a small battery container member mounted on a portable electronic device or the like, and a large battery container member mounted on a two-wheeled or four-wheeled vehicle, a railway vehicle, or the like, in accordance with battery dimensions.

In the secondary battery 10 having the configuration described above, the positive electrode tabs 32a of one electrode group and the negative electrode tabs 34a of the other electrode group that are connected in series in the container member 12 are aligned in the Z-direction which is a stacking direction. It is thus possible to minimize the connecting distance, reduce the resistance between the electrode groups 21 and 22, and increase energy density.

The secondary battery 10 has the external connection terminals 24 and 25 that are respectively lead out of one side and the other in the X-direction, and can therefore have the advantage of being able to prevent a short circuit from being caused by the contact between the terminals. The tabs 31a and 35a in the middle are separate from a pair of tabs 32a and 34a on both sides, and the tabs connected to the different terminals 24 and 25 are located apart from each other, so that connecting work can be accurately and easily conducted. The total dimension of the tabs 31a, 32a, 34a, and 35a in the Y-direction is formed into a uniform dimension to have a certain uniform sectional area, which makes it possible to provide the advantageous effects of being able to minimize electric resistance.

Furthermore, the aligned tabs 32a and 34a are collectively connected to the lead 23 in one place, so that the connecting length can be shorter than when the positive electrode tabs 32a and the negative electrode tabs 34a are independently collected and then connected to the common lead.

That is, according to the first approach, two or more electrode groups are stacked in a first direction and comprise negative electrodes comprising negative electrode tabs and positive electrodes comprising positive electrode tabs that are alternately stacked, and the negative electrode tabs of one of the electrode groups and the positive electrode tabs of the other electrode group are arranged in rows in the first direction at one end of a stack in a second direction, and electrically connected in series by a connector. One of the positive electrode tabs of one of the electrode groups and the negative electrode tabs of the other electrode group is disposed at the other end in the second direction, and the other of the positive electrode tabs of one of the electrode groups and the negative electrode tabs of the other electrode group is disposed, at one end in the second direction, at a position different from those of the negative electrode tabs of one of the electrode groups and the positive electrode tabs of the other electrode group that are connected in series. It is thus possible to minimize the connecting distance of the series connection, reduce the resistance between the electrode groups, and increase energy density. Because the external connection positive electrode tabs and negative electrode tabs are respectively disposed on one side and the other, a short circuit caused by the contact between the terminals can be prevented.

### [Second Approach]

This approach is not according to the invention as defined in the appended claims.

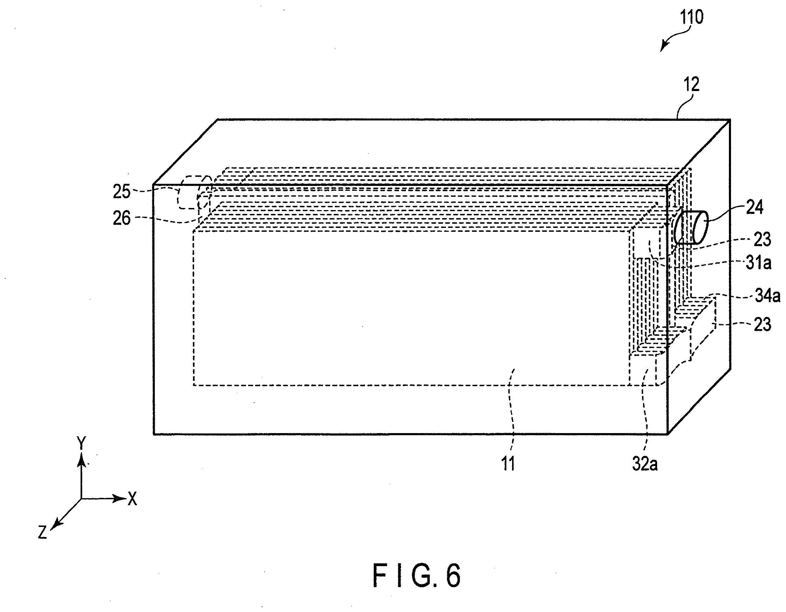

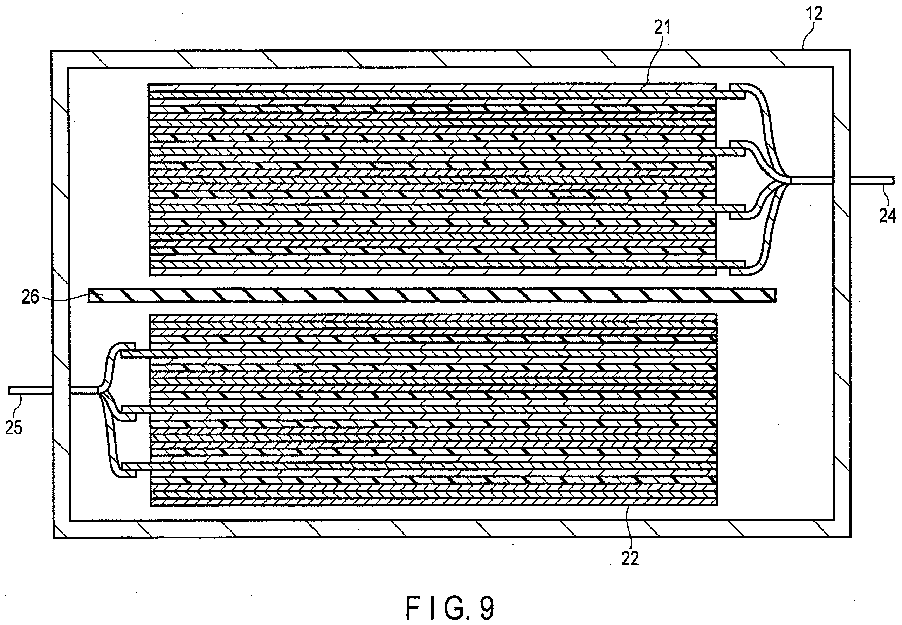

A secondary battery 110 according to a second approach is described below with reference to FIG. 6 to FIG. 9. The secondary battery 110 according to the second approach is different in the arrangement of the negative electrode tabs 31a and 34a and the positive electrode tabs 32a and 35a compared to the first approach, but similar in other respects to the secondary battery 10 according to the first approach. The same configurations in the present approach as those in the first approach are not repeatedly described.

The secondary battery 110 shown in FIG. 6 to FIG. 9 comprises an electrode group stack 11, and a container member 12 which houses the electrode group stack 11. In the present approach, the secondary battery 110 is rectangularly configured, and has a negative electrode external connection terminal 24 provided on one side of the container member 12 in the X-direction, and a positive electrode external connection terminal 25 provided on the other side.

The electrode group stack 11 comprises electrode groups 21 and 22, an electrolyte with which the electrode groups 21, 21 are impregnated so that the electrolyte is held therein, a lead 23 which is a connector to electrically connect the electrode groups 21 and 22, external connection terminals 24 and 25 connected to the ends of the respective electrode groups 21 and 22, and an insulating sheet 26 disposed between the electrode groups 21 and 22 that are stacked and arranged. In the present approach, the two electrode groups 21 and 22 that are connected in series by the lead 23 disposed on the other side in the X-direction are stacked across the insulating sheet 26 in the Z-direction.

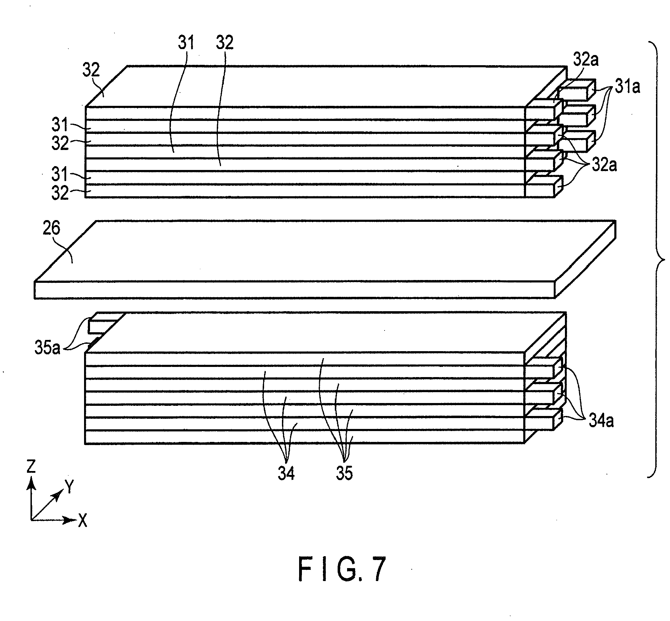

On one hand, for example, the top first electrode group 21 in FIG. 7 comprises negative electrodes 31 having negative electrode tabs 31a, positive electrodes 32 having positive electrode tabs 32a, a separator 33 disposed between the negative electrode 31 and the positive electrode 32, and a nonaqueous electrolyte with which the negative electrodes 31 and the positive electrodes 32 are impregnated. In the present approach, three negative electrodes 31 and four positive electrodes 32 are alternately stacked in the Z-direction by way of example.

On the other hand, for example, the bottom second electrode group 22 in FIG. 7 comprises negative electrodes 34 having negative electrode tabs 34a, positive electrodes 35 having positive electrode tabs 35a, a separator 36 disposed between the negative electrode 34 and the positive electrode 35, and a nonaqueous electrolyte with which the negative electrodes 34 and the positive electrodes 35 are impregnated. In the present approach, four negative electrodes 34 and three positive electrodes 35 are alternately stacked in the Z-direction by way of example.

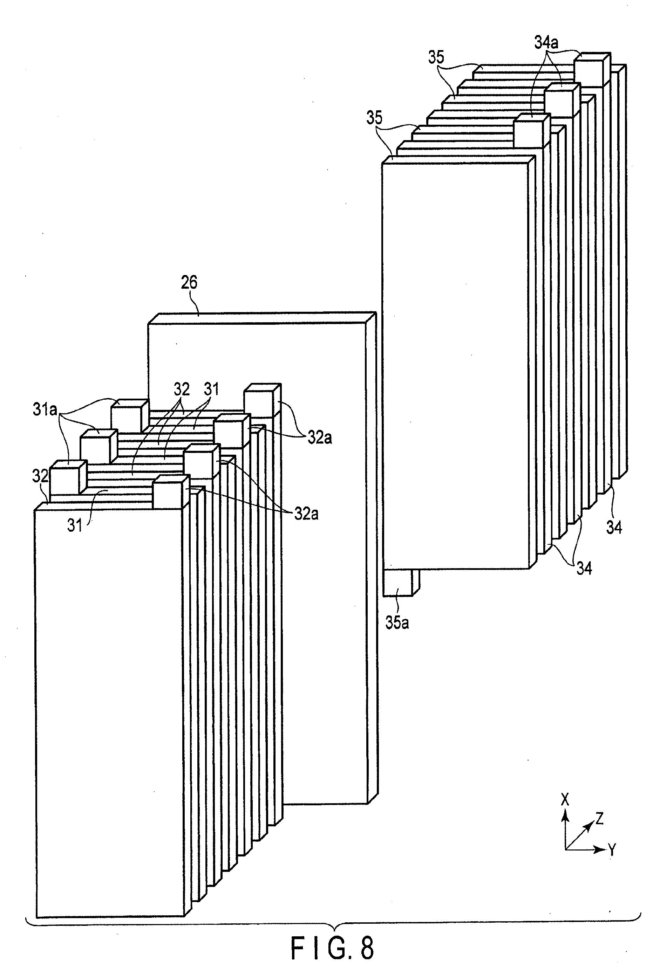

As shown in FIG. 8, FIG. 9, and FIG. 4, the negative electrodes 31 and 34 comprise current collectors 31c and 34c, and negative electrode layers 31d and 34d formed on one surface or both surfaces of the current collectors 31c and 34c. The negative electrode layers 31d and 34d include an active material, a conductive agent, and a binder. The negative electrode tabs 31a and 34a protrude in the X-direction from any edges in the X-direction as parts of the current collectors 31c and 34c.

The positive electrodes 32 and 35 comprise current collectors 32c and 35c, and positive electrode layers 32d and 35d formed on one surface or both surfaces of the current collectors 32c and 35c. The positive electrode layers 32d and 25d include an active material, a conductive agent, and a binder. The positive electrode tabs 32a and 35a protrude in the X-direction from any edges in the X-direction as parts of the current collectors 32c and 35c.

The negative electrode tabs of one of a pair of electrode groups 21 and 22 and the positive electrode tabs of the other electrode group are aligned in the Z-direction. That is, in the present approach, the positive electrode tabs 32a of the first electrode group 21 and the negative electrode tabs 34a of the second electrode group 22 are aligned in the Z-direction on the same edge of the stack 11 on one side in the X-direction, collected in one place, and connected in series by the lead 23. The positive electrode tabs 32a of the first electrode group 21 and the negative electrode tabs 34a of the second electrode group 22 are collected at the middle position of the stack 11 in the X-direction, for example, by the lead 23.

The positive electrode tabs 35a on one side and the negative electrode tabs 31a on the other side that are not connected by the lead 23 respectively extend from one side and the other side in the X-direction, and are respectively connected to the terminals 24 and 25. Specifically, the negative electrode tabs 31a extend from one side in the X-direction and are thus connected to the terminal 24, and the positive electrode tabs 35a extend from the other side and are thus connected to the terminal 25.

The positive electrode tabs 32a and the negative electrode tabs 34a that are connected to the lead 23 are provided on one side in the Y-direction. On the other hand, the positive electrode tabs 35a and the negative electrode tabs 31a that are connected to the terminals 24 and 25 are provided on the opposite sides in the Y-direction. That is, the positive electrode tabs 35a and the negative electrode tabs 31a are disposed close to one side of the Y-direction, whereas the positive electrode tabs 32a and the negative electrode tabs 34a are disposed close to the other side of the Y-direction.

Rows of the positive electrode tabs 32a and the negative electrode tabs 34a and rows of the negative electrode tabs 31a extend from edges at one end in the X-direction, but are different in position in the Y-direction, and are arranged without overlap. The positive electrode tabs 35a extend from an edge at the other end in the X-direction.

In the present approach, all of the positive electrode tabs 32a and 35a and the negative electrode tabs 31a and 34a are set at about the same dimension in the Y-direction. For example, in the present approach, when the Y-direction dimension of, for example, the positive electrodes 32 and 35 and the negative electrodes 31 and 34 is Y0, all of the positive electrode tabs 32a and 35a and the negative electrode tabs 31a and 34a are set at 1/4 Y0 to 1/2 Y0.

The electrode groups 21 and 22 are connected by the lead 23. Specially, the positive electrode tabs 32a of one electrode group 21 are connected in series to the negative electrode tabs 34a of the other electrode group 22 by the lead 23.

The lead 23 is made of a metallic material. The lead 23 is connected to the edges of the electrode groups 21 and 22 on one side in the X-direction. The lead 23 comprises connection pieces 23a. The respective connection pieces 23a are connected to the tabs 32a and 34a on one end, and collectively joined to each other in one place on the other end. That is, the lead 23 is connected to the positive electrode tabs 32a of the positive electrodes 32 of one electrode group 21 and the negative electrode tabs 34a of the negative electrodes 34 of the other electrode group 22, and thereby connects a pair of electrode groups 21 and 22 in series.

Therefore, the lead-out directions of the tabs connected to different terminals are separated, and the tabs connected to each other are aligned, whereby the connecting distance of the electrodes is reduced, and thus connection processing can be easier. It is thus possible to minimize the distance of the lead 23. The dimensions of the current collectors are distributed so that the dimension of each tab is equally set, whereby the sectional area of each tab is increased, and energy density can be improved accordingly.

Advantageous effects similar to those in the first approach are obtained in the secondary battery 110 according to the present approach as well.

### [Third Approach]

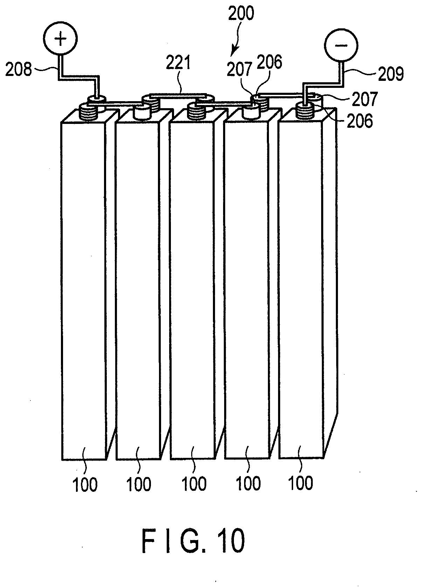

A battery module 200 according to a third approach is described below with reference to FIG. 10. FIG. 10 is a perspective view schematically showing an example of the battery module according to the third approach.
The battery module according to the third approach includes plural single batteries 100. Each of the single batteries may be arranged electrically connected in series, in parallel, or in a combination of in-series connection and in-parallel connection. A battery module 200 shown in FIG. 10 includes five single-batteries 100, four bus bars 221, a positive electrode-side lead 22, and a negative electrode-side lead 209.

At least one of the single-batteries 100 is a secondary battery 10 according to the first approach or secondary battery 110 according to the second approach.

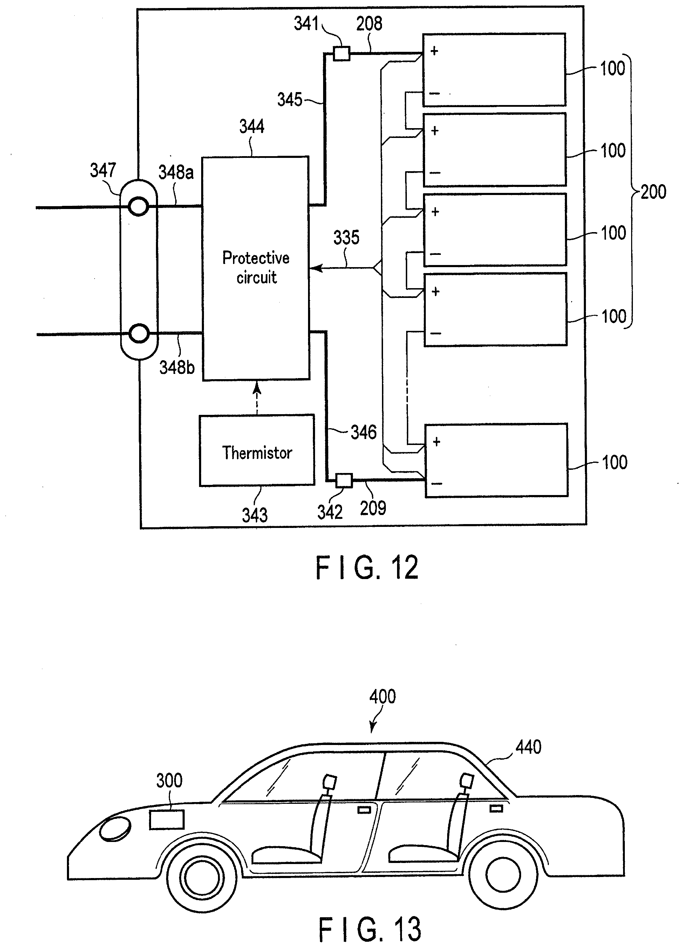

Each bus bar 221 connects a negative electrode terminal 206 of one single-battery 100 and a positive electrode terminal 207 of the single-battery 100 positioned adjacent. The five single-batteries 100 are thus connected in series by the four bus bars 221. That is, the battery module 200 shown in FIG. 12 is a battery module of five in-series connection.

As shown in FIG. 10, the positive electrode terminal 207 of the single-battery 100 located at one end on the left among the row of the five single-batteries 100 is connected to the positive electrode-side lead 208for external connection. In addition, the negative electrode terminal 206 of the single-battery 100 located at the other end on the right among the row of the five single-batteries 100 is connected to the negative electrode-side lead 209 for external connection.

The battery module 200 according to the third approach uses the secondary batteries 10 and 110 as the unit cells 100, and can thereby reduce the connecting distance of the series connection in each of the unit cells 100 to reduce resistance. That is, according to the third approach, the positive electrode tabs and the negative electrode tabs that are connected in series to each other are aligned in the stacking direction in the electrode groups, and the connecting distance can be thereby reduced to reduce resistance.

### [Fourth Approach]

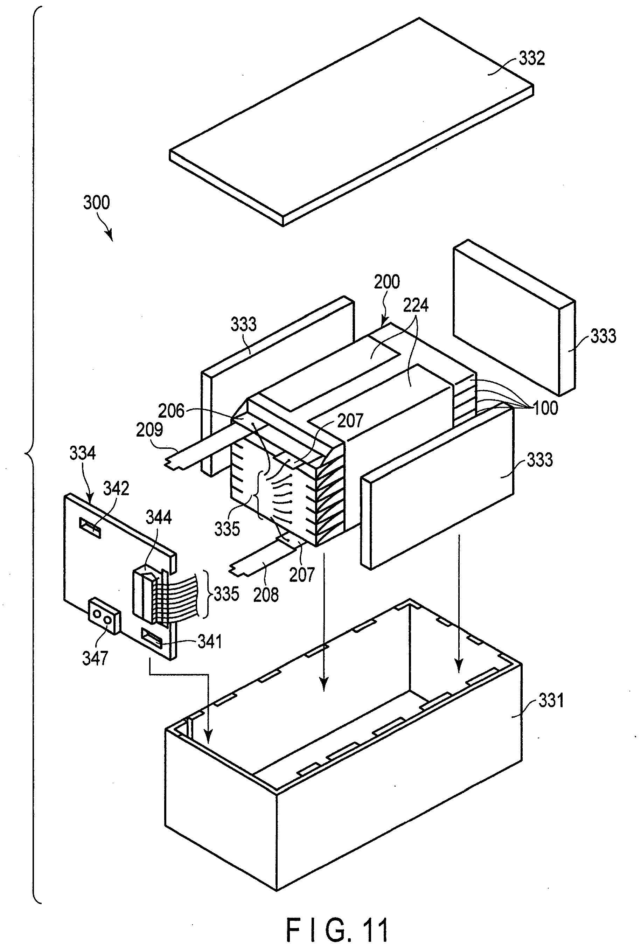

A battery pack 300 according to fourth approach is described below with reference to FIG. 11 and FIG. 12. FIG. 11 is a perspective view schematically showing an example of the battery module according to the third approach. FIG. 11 is an exploded perspective view schematically showing an example of the battery pack according to the fourth approach. FIG. 12 is a block diagram showing an example of an electric circuit of the battery pack shown in FIG. 11.

A battery pack 300 shown in FIGS. 11 and 12 includes a housing container 331, a lid 332, protective sheets 333, a battery module 200, a printed wiring board 334, wires 335, and an insulating plate (not shown). The battery module 200 is the battery module 200 according to the third approach and the battery module 200 has one or more secondary batteries 10 or 110.

The housing container 331 is configured to house the protective sheets 333, the battery module 200, the printed wiring board 334, and the wires 335. The lid 332 covers the housing container 331 to house the battery module 200 and the like. Although not shown, opening(s) or connection terminal(s) for connecting to external device(s) and the like are provided on the housing container 331 and lid 332.

The protective sheets 333 are arranged on both inner surfaces of the housing container 331 along the long-side direction and on the inner surface along the short-side direction, facing the printed wiring board 334 across the battery module 200 positioned therebetween. The protective sheets 333 are made of, for example, resin or rubber.

The battery module 200 includes plural single-batteries 100, a positive electrode-side lead 208, a negative electrode-side lead 209, and an adhesive tape 224. The battery module 200 may alternatively include only one single-battery 100.

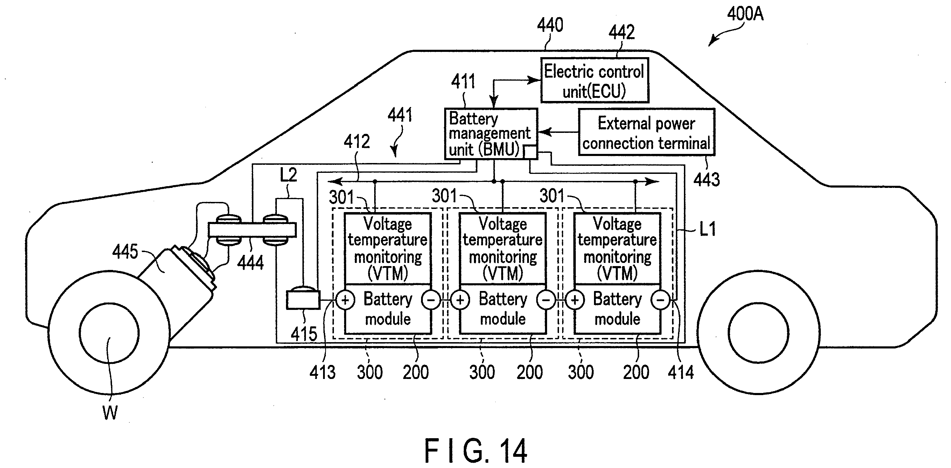

At least one of the plural single-batteries 100 is a secondary battery 10 or 110 according to the first or second approach. The plural single-batteries 100 are stacked such that the negative electrode terminals 206 and the positive electrode terminals 207, which extend outside, are directed toward the same direction. The plural single-batteries 100 are electrically connected in series, as shown in FIG. 14. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape 224 fastens the plural single-batteries 100. The plural single-batteries 100 may be fixed using a heat-shrinkable tape in place of the adhesive tape 224. In this case, the protective sheets 333 are arranged on both side surfaces of the battery module 200, and the heat-shrinkable tape is wound around the battery module 200 and protective sheets 333. After that, the heat-shrinkable tape is shrunk by heating to bundle the plural single-batteries 100.

One end of the positive electrode-side lead 208is connected to the positive electrode terminal 207 of the single-battery 100 located lowermost in the stack of the single-batteries 100. One end of the negative electrode-side lead 209 is connected to the negative electrode terminal 206 of the single-battery 100 located uppermost in the stack of the single-batteries 100.

The printed wiring board 334 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One principal surface of the printed wiring board 334 faces the surface of the battery module 200 from which the negative electrode terminals 206 and the positive electrode terminals 207 extend out. An insulating plate (not shown) is disposed in between the printed wiring board 334 and the battery module 200.

The positive electrode-side connector 341 is provided with a through hole. By inserting the other end of the positive electrode-side lead 208into the though hole, the positive electrode-side connector 341 and the positive electrode-side lead 208become electrically connected. The negative electrode-side connector 342 is provided with a through hole. By inserting the other end of the negative electrode-side lead 209 into the though hole, the negative electrode-side connector 342 and the negative electrode-side lead 209 become electrically connected.

The thermistor 343 is fixed to one principal surface of the printed wiring board 334. The thermistor 343 detects the temperature of each single-battery 100 and transmits detection signals to the protective circuit 344.

The external power distribution terminal 347 is fixed to the other principal surface of the printed wiring board 334. The external power distribution terminal 347 is electrically connected to device(s) that exists outside the battery pack 300.

The protective circuit 344 is fixed to the other principal surface of the printed wiring board 334. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural single-batteries 100 via the wires 335.

The protective circuit 344 controls charge and discharge of the plural single-batteries 100. The protective circuit 344 is also configured to cut-off electric connection between the protective circuit 344 and the external power distribution terminal 347, based on detection signals transmitted from the thermistor 343 or detection signals transmitted from each single-battery 100 or the battery module 200.

An example of the detection signal transmitted from the thermistor 343 is a signal indicating that the temperature of the single-battery (single-batteries) 100 is detected to be a predetermined temperature or more. An example of the detection signal transmitted from each single-battery 100 or the battery module 200 is a signal indicating detection of over-charge, over-discharge, and overcurrent of the single-battery (single-batteries) 100. When detecting over-charge or the like for each of the single batteries 100, the battery voltage may be detected, or a positive electrode potential or negative electrode potential may be detected. In the latter case, a lithium electrode to be used as a reference electrode may be inserted into each single battery 100.

Note, that as the protective circuit 344, a circuit included in a device (for example, an electronic device or an automobile) that uses the battery pack 300 as a power source may be used.

Such a battery pack 300 is used, for example, in applications where excellent cycle performance is demanded when a large current is extracted. More specifically, the battery pack 300 is used as, for example, a power source for electronic devices, a stationary battery, an onboard battery for vehicles, or a battery for railway cars. An example of the electronic device is a digital camera. The battery pack 300 is particularly favorably used as an onboard battery.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in-series connection and in-parallel connection. The printed wiring board 334 and the wires 335 may be omitted. In this case, the positive electrode-side lead 208 and the negative electrode-side lead 209 may be used as the external power distribution terminal.

The battery pack 300 according to the fourth approach includes the secondary battery 10 according to the first approach, the secondary battery 110 according to the second approach or the battery module 200 according to the third approach and can thereby reduce the connecting distance of the series connection in each of the unit cells 100 to reduce resistance.

According to the fourth approach, the secondary battery includes the insulating sheet disposed between the electrode groups. It is thus possible to provide advantageous effects of preventing contact between the electrolyte and preventing a short circuit.

The battery pack may include a single secondary battery 10,110 according to the first or the second approach, in place of the battery module according to the third approach.

The battery pack 300 according to the fourth approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack 300 according to the fourth approach may further comprise an external power distribution terminal. The external power distribution terminal is configured to externally output current from the secondary battery, and to input external current into the secondary battery. In other words, when the battery pack 300 is used as a power source, the current is provided out via the external power distribution terminal. When the battery pack 300 is charged, the charging current (including regenerative energy of motive force of vehicles such as automobiles) is provided to the battery pack via the external power distribution terminal.

### (Fifth Approach)

An example of the vehicle according to the fifth approach is explained below, with reference to FIG. 13.

FIG. 13 is a cross-sectional view schematically showing an example of a vehicle according to the fifth approach.

A vehicle 400, shown in FIG. 13 includes a vehicle body 440 and a battery pack 300 according to the fourth approach. Examples of the vehicle 400 according to the fifth approach include two- to four-wheeled hybrid electric automobiles, two- to four-wheeled electric automobiles, electric assist bicycles, and railway cars.

In the vehicle 400, the battery pack 300 is configured, for example, to recover regenerative energy from motive force of the vehicle.

The battery pack 300 includes the battery module 200 according to the third approach.

The battery module 200 has plural single batteries 100 that are connected in series. At least one of the single batteries 100 is the second battery 10 of the first approach or the second battery 110 of the second approach

In FIG. 13, the vehicle 400 is a four-wheeled automobile. As the vehicle 400, for example, two- to four-wheeled hybrid electric automobiles, two- to four-wheeled electric automobiles, electric assist bicycles, and railway cars may be used.

This vehicle 400 may have plural battery packs 300 installed. In such a case, the battery packs 300 may be connected in series, connected in parallel, or connected in a combination of in-series connection and in-parallel connection.

The battery pack 300 is installed in an engine compartment located at the front of the vehicle body 40. The location of installing the battery pack 300 is not particularly limited. The battery pack 300 may be installed in rear sections of the vehicle body 40, or under a seat. The battery pack 300 may be used as a power source of the vehicle 400. The battery pack 300 can also recover regenerative energy of motive force of the vehicle 400. The vehicle 400 according to this approach includes the second battery 10 according to the first approach or the second battery 110 according to the second approach as the single battery 100, and can therefore prevent in
the short circuit in single battery 100.

According to the vehicle400 in the fifth approach, the negative electrode tabs and the positive electrode tabs that are connected in series in the electrode groups are aligned in the Z-direction at one end in the X-direction, and it is thus possible to provide advantageous effects of reducing the connecting distance between the electrode groups and reducing resistance.

### (Sixth Approach)

An example of the vehicle 400A according to the sixth approach is explained below, with reference to FIG. 14.

FIG. 14 is a cross-sectional view schematically showing an example of a vehicle 400A according to the sixth approach. A vehicle 400A, shown in FIG. 14, is an electric automobile.

The vehicle 400A, shown in FIG. 10, includes a vehicle body 440, a vehicle power source 441, a vehicle ECU (electric control unit) 442, which is a master controller of the vehicle power source 441, an external terminal (an external power connection terminal) 443, an inverter 444, and a drive motor 445.

The vehicle 400 includes the vehicle power source 441, for example, in the engine compartment, in the rear sections of the automobile body, or under a seat. In FIG. 10, the position of the vehicle power source 441 installed in the vehicle 400 is schematically shown.

The vehicle power source 441 includes plural (for example, three) battery packs 300, a battery management unit (BMU) 411, and a communication bus 412.

The three battery packs 300 are electrically connected in series. The battery pack 300 includes a battery module 200 and a battery module monitoring unit (VTM: voltage temperature monitoring) 301. The battery packs 300can each be independently removed, and may be exchanged by a different battery pack 300.

At least one of the three battery packs300 is the battery pack 300 according to the fourth approach and at least one of the plural battery modules 200 is one of the battery modules 300 according to the third approach.

Each of the battery modules 200 includes plural single-batteries 100 connected in series. At least one of the plural single-batteries is the secondary battery 10 according to the first approach or the secondary battery 110 according to the second approach. The battery modules 200 each perform charging and discharging via a positive electrode terminal 413 and a negative electrode terminal 414.

In order to collect information concerning security of the vehicle power source 441, the battery management unit 411 performs communication with the battery module monitoring units 301 and collects information such as voltages or temperatures of the single-batteries 100 included in the battery modules 200 included in the vehicle power source 441.

The communication bus 412 is connected between the battery management unit 411 and the battery module monitoring units 301. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301 measure a voltage and a temperature of each single-battery in the battery modules 200 based on commands from the battery management unit 411. It is possible, however, to measure the temperatures only at several points per battery module, and the temperatures of all of the single-batteries need not be measured.

The vehicle power source 441 may also have an electromagnetic contactor (for example, a switch unit 415 shown in FIG. 10) for switching connection between the positive electrode terminal 413 and the negative electrode terminal 414. The switch unit 415 includes a precharge switch (not shown), which is turned on when the battery modules 200 are charged, and a main switch (not shown), which is turned on when battery output is supplied to a load. The precharge switch and the main switch include a relay circuit (not shown), which is turned on or off based on a signal provided to a coil disposed near a switch element.

The inverter 444 converts an inputted direct current voltage to a three-phase alternate current (AC) high voltage for driving a motor. Three-phase output terminal(s) of the inverter 444 is (are) connected to each three-phase input terminal of the drive motor 45. The inverter 444 controls an output voltage based on control signals from the battery management unit 411 or the vehicle ECU 441, which controls the entire operation of the vehicle.

The drive motor 445 is rotated by electric power supplied from the inverter 444. The rotation is transferred to an axle and driving wheels W via a differential gear unit, for example.

The vehicle 400 also includes a regenerative brake mechanism, though not shown. The regenerative brake mechanism rotates the drive motor 445 when the vehicle 400 is braked, and converts kinetic energy into regenerative energy, as electric energy. The regenerative energy, recovered in the regenerative brake mechanism, is inputted into the inverter 444 and converted to direct current. The direct current is inputted into the vehicle power source 441.

One terminal of a connecting line L1 is connected via a current detector (not shown) in the battery management unit 411 to the negative electrode terminal 414 of the vehicle power source 441. The other terminal of the connecting line L1 is connected to a negative electrode input terminal of the inverter 444.

One terminal of a connecting line L2 is connected via the switch unit 415 to the positive electrode terminal 413 of the vehicle power source 441. The other terminal of the connecting line L2 is connected to a positive electrode input terminal of the inverter 444.

The external terminal 443 is connected to the battery management unit 411. The external terminal 443 is able to connect, for example, to an external power source.

The vehicle ECU 442 cooperatively controls the battery management unit 411 together with other units in response to inputs operated by a driver or the like, thereby performing the management of the whole vehicle. Data concerning the security of the vehicle power source 441, such as a remaining capacity of the vehicle power source 441, are transferred between the battery management unit 411 and the vehicle ECU 442 via communication lines.

A vehicle 400A according to a sixth approach is equipped with the battery pack 300 according to the fourth approach. Therefore, the vehicle 400A comprises the secondary battery 10 or 110 according to the first or second approach as the unit cell 100, and can thereby reduce the resistance between the electrode groups 21 and 22 in the unit cell 100, and increase energy density.

According to the vehicle in the sixth approach, in the unit cell 100, the connecting distance by the lead 23 can be reduced, the resistance between the electrode groups 21 and 22 can be reduced, and energy density can be increased. Examples are described below.

To ascertain the advantageous effects of the secondary battery 10 according to the first approach and the secondary battery 110 according to the second approach described above, Examples 1 and 2 of a configuration shown below and Comparative Example 1 were used to conduct a test to compare volume energy density (Wh/L), weight energy density (Wh/kg), and cell internal resistance (mΩ).

In each of Examples 1 and 2 and Comparative Example 1, LiMn_{0.85}Fe_{0.1}Mg_{0.05}PO₄ having an olivine structure in which carbon fine particles (average particle diameter of 5 nm) were attached to the surface (attachment amount of 0.1 wt%) and in which the average particle diameter of primary particles was 50 nm was used as a positive electrode active material. This positive electrode active material was blended with 5 wt% of graphite powder as a conductive agent and 5 wt% of PVdF as a binder, and the blend was dispersed into an n-methylpyrrolidone (NMP) solvent to prepare slurry, and the slurry was applied to both surfaces of an aluminum alloy foil (purity of 99%) having a thickness of 15 µm, which was followed by drying and a pressing process to form a positive electrode active material containing layer, whereby a positive electrode was obtained.

Li₄Ti₅O₁₂ particles having an average particle diameter of 0.6 µm or more and a specific surface area of 10 m²/g were used as a negative electrode active material. This negative electrode active material was blended with acetylene black powder as a conductive agent, graphite powder as a conductive agent, and PVdF as a binder at a weight ratio of 85:6:5:4, and the blend was dispersed into an n-methylpyrrolidone (NMP) solvent to prepare slurry. The obtained slurry was applied to both surfaces of an aluminum alloy foil (purity of 99.3%) having a thickness of 15 µm, which was followed by drying and a pressing process to form a negative electrode active material containing layer, whereby a negative electrode was obtained.

A polyethylene (PE) porous film having a thickness of 8 µm was prepared as a separator.

1.5 mol/L of electrolyte salt LiPF₆ was dissolved into an organic solvent in which propylene carbonate (PC) and diethyl carbonate (DEC) were mixed at a volume ratio of 2:1, and a liquid nonaqueous electrolyte was thus prepared as an electrolyte.

### (Example 1)

Example 1 included the configuration of the secondary battery 10 according to the first approach.

### (Example 2) Example 2 is not according to the invention.

Example 2 included the configuration of the secondary battery 110 according to the second approach.

### (Comparative Example 1)

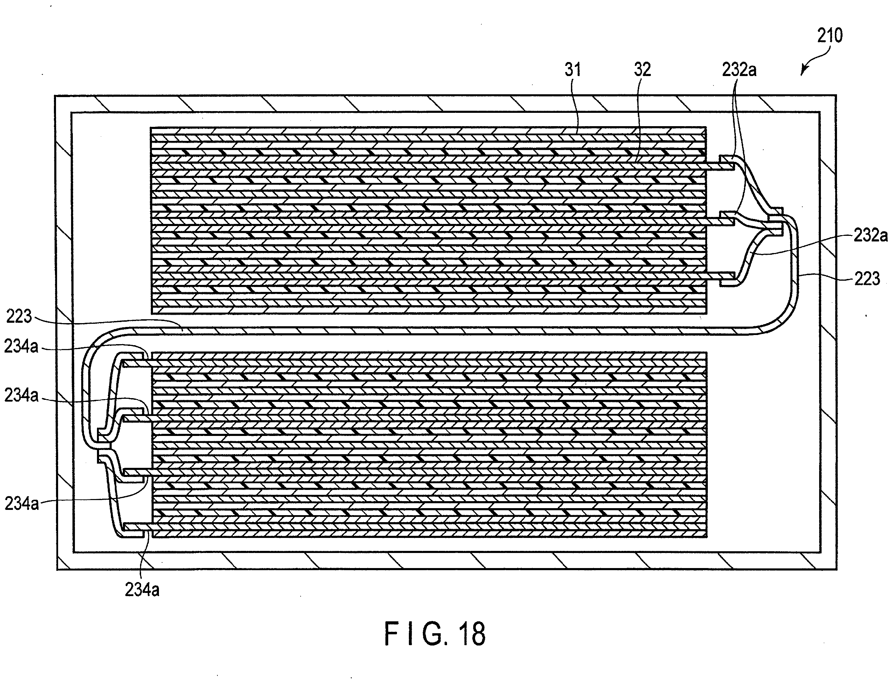

FIG. 18 is a sectional view showing the configuration of a secondary battery 210 according to Comparative Example 1. In the secondary battery 210 according to Comparative Example 1, negative electrode tabs 234a and positive electrode tabs 232a that are connected in series are disposed on the edges on the opposite sides in the X-direction, and connected by a strip-shaped lead 223.

The produced secondary batteries according to Examples 1 and 2 and Comparative Example 1 were left under an environment of 25°C for 24 hours. The batteries were then brought to an initial constant current charge-discharge test under an environment of 25°C. The batteries were first charged to 6.0 V at 1 A, and then discharged to 3.0 V at 1 A, and the battery capacities and an average operating voltage were ascertained.

Table 1 shows the forms of the secondary batteries according to Examples 1 and 2 and Comparative Example 1, volume energy density (Wh/L), weight energy density (Wh/kg), and cell internal resistance (mΩ). Both the battery capacities were 1 (Ah), and an average operating voltage was 5 (V).

### [Table 1]

**Table 1**

| | Battery capacity (Ah) | Average operating voltage (V) | Volume energy density (Wh/L) | Weight energy density (wh/kg) | Cell internal resistance (mΩ) |
|---|---|---|---|---|---|
| Example 1 | 1 | 5 | 153 | 84 | 30 |
| Example 2 | 1 | 5 | 153 | 83 | 29 |
| Comparative Example 1 | 1 | 5 | 150 | 75 | 50 |

As shown in Table 1, it is obvious that the volume energy density (Wh/L) and the weight energy density (Wh/kg) are higher, and the cell internal resistance (mΩ) is lower, in the secondary batteries 10 and 110 according to Examples 1 and 2 than in the secondary battery 210 according to Comparative Example.

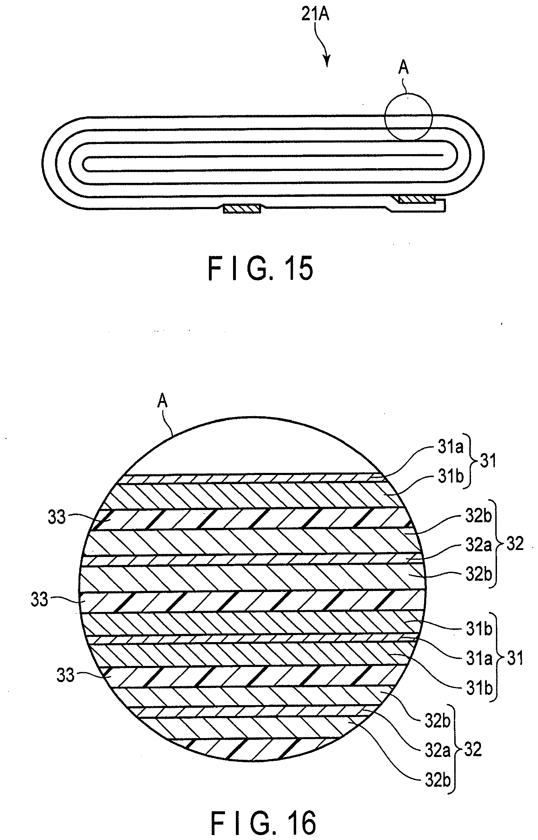

The electrode groups 21 and 22 are a stacking type in the examples shown in the approaches described above, but are not limited thereto. For example, a flat type wound electrode group 21A shown in FIG. 15 and FIG. 16 may be used instead of the stacking type. The flat type wound electrode group 21A includes a negative electrode 31, a separator 33, and a positive electrode 32. The wound electrode group 21A has the separator 33 put between the negative electrodes 31 and 34 and the positive electrodes 32 and 35, and is wound more than one time. Even when the wound electrode group 21A is used, advantageous effects similar to those in the approaches described above are obtained.

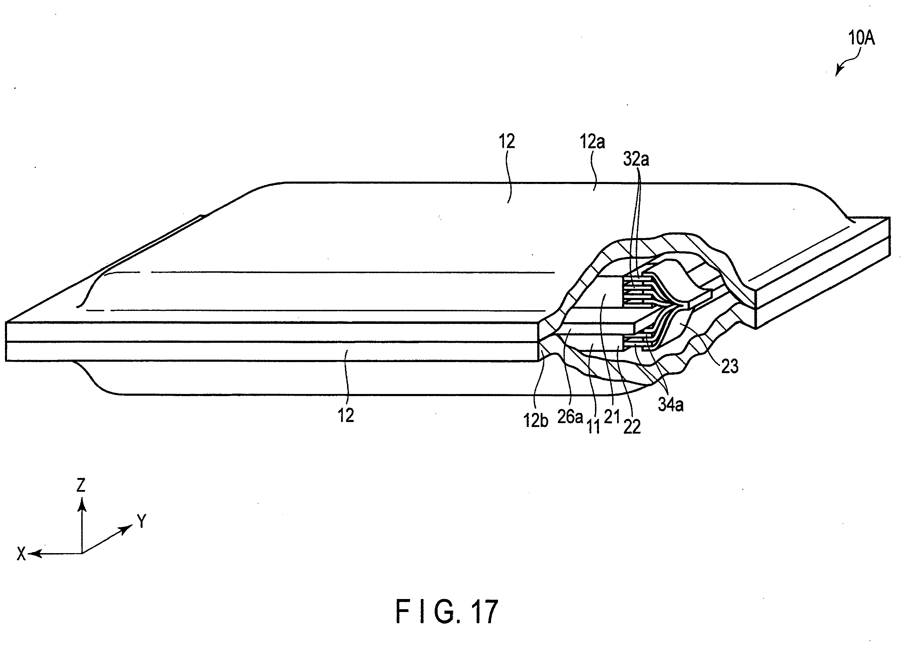

The container member 12 is not limited to the metallic container. For example, the container member 12 may be made of a laminate material as in a secondary battery 10A shown in FIG. 17 as an alternative approach. The secondary battery 10A has a pair of laminate films 12a and 12b which catch the electrode group stack 11 in between and which covers the surface of the electrode group stack 11. In the present approach, the pair of rectangular laminate films 12a and 12b are disposed on one side and the other of the stack, and the outer edges of the pair of laminate films 12a and 12b are joined together.

For example, multilayer films in which a metallic layer intervenes between resin layers are used as the laminate films 12a and 12b. The metallic layer is preferably aluminum foil or aluminum alloy foil for weight reduction. A polymeric material such as polypropylene (PP), polyethylene (PE), nylon, or polyethylene terephthalate (PET) can be used in the resin layers. The thickness of the laminate films is preferably 0.2 mm or less. The purity of the aluminum foil is preferably 99.5% or less.

The laminate films 12a and 12b can be sealed by, for example, thermal fusion bonding and thereby molded as the container member 12.

Although two electrode groups 21 and 22 are stacked in the examples shown, these examples are not limitations, and there may be a configuration comprising, for example, three or more electrode groups stacked in the Z-direction. In this case as well, the positions of the tabs that are connected in series are aligned so that the connecting length can be reduced, and advantageous effects similar to those in the approaches described above can be obtained.

As the electrolyte, an aqueous electrolyte may be used instead of the liquid nonaqueous electrolyte and the gel like nonaqueous electrolyte illustrated in the approaches described above, or a solid electrolyte can also be used.

The respective negative electrode tabs 31a and 34a and positive electrode tabs 32a and 35a may be protruding pieces integrally formed as parts of the current collectors 31c, 34c, 32c, and 35c, or may be formed separately from the current collectors 31c, 34c, 32c, and 35c and formed by metal pieces that are connected to the edges of the current collectors 31c, 34c, 32c, and 35c.

## Claims

1. A secondary battery (10) comprising two or more electrode groups (21,22) stacked in a first direction,
each of the electrode groups (21,22) comprising negative electrodes (31,34) and positive electrodes (32,35), the negative electrodes (31,34) and the positive electrodes (32,35) are alternately stacked in the first direction,
each of the negative electrodes (31,34) comprising a negative electrode tab (31a,34a), each of the positive electrodes (32,35) comprising a positive electrode tab (32a,35a),
wherein the negative electrode tabs (34a) of one of the electrode groups (22) and the positive electrode tabs (32a) of the other electrode group (21) are arranged in rows in the first direction at one end, in a second direction that intersects with the first direction, of a stack (11) in which the electrode groups (21,22) are stacked, and the negative electrode tabs (34a) of one of the electrode groups (22) and the positive electrode tabs (32a) of the other electrode group (21) are electrically connected in series by a connector (23), and
one of the positive electrode tabs (32a,35a) of one of the electrode groups (21,22) and the negative electrode tabs (31a,34a) of the other electrode group (21,22) is disposed at the other end in the second direction, and the other of the positive electrode tabs (32a,35a) of one of the electrode groups (21,22) and the negative electrode tabs (31a,34a) of the other electrode group (21,22) is disposed, at one end in the second direction, at a position different from those of the negative electrode tabs (34a) of one of the electrode groups (21) and the positive electrode tabs (32a) of the other electrode group (22) that are connected in series,
**characterized in that** each of the electrode groups (21,22) has one of either the negative electrode tabs (31a,34a) or the positive electrode tabs (32a,35a) disposed, on an edge in the second direction, in the middle of a third direction that intersects with the first direction and the second direction, and the others of the negative electrode tabs (31a,34a) and the positive electrode tabs (32a,35a) are respectively disposed at both ends in the third direction on the above edge, and the dimension in the third direction of the tab disposed in the middle is the same as the total dimension in the third direction of a pair of tabs disposed at both ends.

2. The secondary battery (10,110) according to claim 1, wherein the electrode groups (21,22) comprise stacked layers of the positive electrode (32,35), the negative electrode (31,34), and a separator (33) disposed between the positive electrode (32,35) and the negative electrode (31,34), and
the negative electrode tabs (31a) of one of the electrode groups (21) and the positive electrode tabs (35a) of the other electrode group (22), or the positive electrode tabs (32s) of one of the electrode groups (21) and the negative electrode tabs (34a) of the other electrode group (22) are collected in one place in the first direction.

3. The secondary battery (10,110) according to claim 1 or 2, further comprising:
an insulating sheet (26) disposed between the electrode groups (21,22) in the first direction, the insulating sheet (26) being configured to be larger in area than the surfaces of the electrode groups (21,22) facing each other, and
a container member (12) to cover a stack (11) in which the electrode groups (21,22) and the insulating sheet (26) are stacked.

4. A battery pack (300) comprising the secondary battery (10,110) according to any one of claims 1 to 3.

5. The battery pack (300) according to claim 4, further comprising:
an external power distribution terminal (347); and
a protective circuit (344).

6. The battery pack (300) according to claim 4 or 5, comprising a plural of secondary batteries (10,110), the plural of the secondary batteries being electrically connected in series, in parallel, or in combination of in series and in parallel.

7. A vehicle (400,400A) comprising the battery pack according to any one of claims 4 to 6.

8. The vehicle (400,400A) according to claim 7, which comprises a mechanism configured to convert kinetic energy of the vehicle into regenerative energy.

## Patentansprüche

1. Sekundärbatterie (10), umfassend zwei oder mehr Elektrodengruppen (21, 22), die in einer ersten Richtung gestapelt sind,
wobei jede der Elektrodengruppen (21, 22) negative Elektroden (31, 34) und positive Elektroden (32, 35) umfasst, wobei die negativen Elektroden (31, 34) und die positiven Elektroden (32, 35) alternierend in der ersten Richtung gestapelt sind,
wobei jede der negativen Elektroden (31, 34) eine negative Elektrodenlasche (31a, 34a) umfasst, jede der positiven Elektroden (32, 35) eine positive Elektrodenlasche (32a, 35a) umfasst;
wobei die negativen Elektrodenlaschen (34a) von einer der Elektrodengruppen (22) und die positiven Elektrodenlaschen (32a) von der anderen Elektrodengruppe (21) an einem Ende in der ersten Richtung in Reihen in einer zweiten Richtung, die die erste Richtung schneidet, von einem Stapel (11), in dem die Elektrodengruppen (21, 22) gestapelt sind, angeordnet sind, und die negativen Elektrodenlaschen (34a) von einer der Elektrodengruppen (22) und die positiven Elektrodenlaschen (32a) von der anderen Elektrodengruppe (21) mittels eines Leiters (23) elektrisch in Reihe geschaltet sind, und
wobei ein Vertreter der positiven Elektrodenlaschen (32a, 35a) von einer der Elektrodengruppen (21, 22) und der negativen Elektrodenlaschen (31a, 34a) von der anderen Elektrodengruppe (21, 22) am anderen Ende in der zweiten Richtung angeordnet ist, und der andere Vertreter der positiven Elektrodenlaschen (32a, 35a) von einer der Elektrodengruppen (21, 22) und der negativen Elektrodenlaschen (31a, 34a) von der anderen Elektrodengruppe (21, 22) an einem Ende in der zweiten Richtung an einer Position angeordnet ist, die sich von denen der negativen Elektrodenlaschen (34a) von einer der Elektrodengruppen (21) und der positiven Elektrodenlaschen (32a) von der anderen Elektrodengruppe (22), die in Reihe geschaltet sind, unterscheidet,
**dadurch gekennzeichnet, dass** jede der Elektrodengruppen (21, 22) entweder die negativen Elektrodenlaschen (31a, 34a) oder die positiven Elektrodenlaschen (32a, 35a) an einer Kante in der zweiten Richtung in der Mitte einer dritten Richtung, die sich mit der ersten Richtung und der zweiten Richtung schneidet, angeordnet hat, und die anderen der negativen Elektrodenlaschen (31a, 34a) und der positiven Elektrodenlaschen (32a, 35a) jeweils an beiden Enden in der dritten Richtung an der obigen Kante angeordnet sind, und die Abmessung in der dritten Richtung der in der Mitte angeordneten Lasche dieselbe wie die Gesamtabmessung in der dritten Richtung eines an beiden Enden angeordneten Laschenpaares ist.

2. Sekundärbatterie (10, 110) gemäß Anspruch 1, wobei die Elektrodengruppen (21, 22) gestapelte Schichten der positiven Elektrode (32, 35), der negativen Elektrode (31, 34) und eines Separators (33), der zwischen der positiven Elektrode (32, 35) und der negativen Elektrode (31, 34) angeordnet ist, umfassen, und
die negativen Elektrodenlaschen (31a) von einer der Elektrodengruppen (21) und die positiven Elektrodenlaschen (35a) von der anderen Elektrodengruppe (22), oder die positiven Elektrodenlaschen (32s) von einer der Elektrodengruppen (21) und die negativen Elektrodenlaschen (34a) von der anderen Elektrodengruppe (22) an einer Stelle in der ersten Richtung gesammelt sind.

3. Sekundärbatterie (10, 110) gemäß Anspruch 1 oder 2, weiterhin umfassend:
eine Isolierlage (26), die in der ersten Richtung zwischen den Elektrodengruppen (21, 22) angeordnet ist, wobei die Isolierlage (26) so konfiguriert ist, dass sie eine größere Fläche als die einander zugewandten Oberflächen der Elektrodengruppen (21, 22) aufweist, und
ein Behälterelement (12) zum Bedecken eines Stapels (11), in dem die Elektrodengruppen (21, 22) und die Isolierlage (26) gestapelt sind.

4. Batteriepack (300), umfassend die Sekundärbatterie (10, 110) gemäß einem der Ansprüche 1 bis 3.

5. Batteriepack (300) gemäß Anspruch 4, weiterhin umfassend:
einen externen Stromverteilungsanschluss (347); und
eine Schutzschaltung (344).

6. Batteriepack (300) gemäß Anspruch 4 oder 5, umfassend mehrere Sekundärbatterien (10, 110), wobei die mehreren Sekundärbatterien elektrisch in Reihe, parallel oder in Kombination von in Reihe und parallel geschaltet sind.

7. Fahrzeug (400, 400A), umfassend den Batteriepack gemäß einem der Ansprüche 4 bis 6.

8. Fahrzeug (400, 400A) gemäß Anspruch 7, das einen Mechanismus umfasst, der konfiguriert ist, um kinetische Energie des Fahrzeugs in regenerative Energie umzuwandeln.

## Revendications

1. Batterie secondaire (10) comprenant deux ou plus de deux groupes d'électrodes (21, 22) empilés dans une première direction,
chacun des groupes d'électrodes (21, 22) comprenant des électrodes négatives (31, 34) et des électrodes positives (32, 35), les électrodes négatives (31, 34) et les électrodes positives (32, 35) sont tour à tour empilées dans la première direction,
chacune des électrodes négatives (31, 34) comprenant une languette d'électrode négative (31a, 34a), chacune des électrodes positives (32, 35) comprenant une languette d'électrode positive (32a, 35a),
dans laquelle les languettes d'électrode négative (34a) de l'un des groupes d'électrodes (22) et les languettes d'électrode positive (32a) de l'autre groupe d'électrodes (21) sont agencées en rangées dans la première direction au niveau d'une extrémité, dans une deuxième direction qui croise la première direction, d'une pile (11) dans laquelle les groupes d'électrodes (21, 22) sont empilés, et les languettes d'électrode négative (34a) d'un des groupes d'électrodes (22) et les languettes d'électrode positive (32a) de l'autre groupe d'électrodes (21) sont électriquement connectées en série par un connecteur (23), et
l'une des languettes d'électrode positive (32a, 35a) d'un des groupes d'électrodes (21, 22) et des languettes d'électrode négative (31a, 34a) de l'autre groupe d'électrodes (21, 22) est disposée au niveau de l'autre extrémité dans la deuxième direction, et l'autre des languettes d'électrode positive (32a, 35a) de l'un des groupes d'électrodes (21, 22) et des languettes d'électrode négative (31a, 34a) de l'autre groupe d'électrodes (21, 22) est disposée au niveau d'une extrémité dans la deuxième direction, au niveau d'une position différente de celles des languettes d'électrode négative (34a) de l'un des groupes d'électrodes (21) et des languettes d'électrode positive (32a) de l'autre groupe d'électrodes (22) qui sont connectées en série,
**caractérisée en ce que** chacun des groupes d'électrodes (21, 22) présente une soit des languettes d'électrode négative (31a, 34a), soit des languettes d'électrode positive (32a, 35a) disposée sur un bord dans la deuxième direction, au milieu d'une troisième direction qui croise la première direction et la deuxième direction, et les autres des languettes d'électrode négative (31a, 34a) et des languettes d'électrode positive (32a, 35a) sont respectivement disposées au niveau des deux extrémités dans la troisième direction sur le bord du dessus, et la dimension dans la troisième direction de la languette disposée au milieu est la même que la dimension totale dans la troisième direction d'une paire de languettes disposée au niveau des deux extrémités.

2. Batterie secondaire (10, 110) selon la revendication 1, dans laquelle les groupes d'électrodes (21, 22) comprennent des couches empilées de l'électrode positive (32, 35), de l'électrode négative (31, 34), et d'un séparateur (33) disposé entre l'électrode positive (32, 35) et l'électrode négative (31, 34), et
les languettes d'électrode négative (31a) de l'un des groupes d'électrodes (21) et les languettes d'électrode positive (35a) de l'autre groupe d'électrodes (22), ou les languettes d'électrode positive (32s) de l'un des groupes d'électrodes (21) et les languettes d'électrode négative (34a) de l'autre groupe d'électrodes (22) sont collectées dans un endroit dans la première direction.

3. Batterie secondaire (10, 110) selon la revendication 1 ou 2, comprenant en outre :
une feuille isolante (26) disposée entre les groupes d'électrodes (21, 22) dans la première direction, la feuille isolante (26) étant configurée pour présenter une plus grande zone que les surfaces des groupes d'électrodes (21, 22) se faisant face, et
un élément de contenant (12) pour recouvrir une pile (11) dans laquelle les groupes d'électrodes (21, 22) et la feuille isolante (26) sont empilés.

4. Bloc-batterie (300) comprenant la batterie secondaire (10, 110) selon l'une quelconque des revendications 1 à 3.

5. Bloc-batterie (300) selon la revendication 4, comprenant en outre :
une borne de distribution de puissance externe (347) ; et
un circuit de protection (344).

6. Bloc-batterie (300) selon la revendication 4 ou 5, comprenant une pluralité de batteries secondaires (10, 110), la pluralité des batteries secondaires étant électriquement connectée en série, en parallèle, ou en combinaison série/parallèle.

7. Véhicule (400, 400A) comprenant le bloc-batterie selon l'une quelconque des revendications 4 à 6.

8. Véhicule (400, 400A) selon la revendication 7, qui comprend un mécanisme configuré pour convertir une énergie cinétique du véhicule en énergie de régénération.
